# EUROPEAN PATENT SPECIFICATION

(11) **EP 0 595 802 B1**
(45) Date of publication and mention of the grant of the patent: **23.07.1997**
(21) Application number: 91906886.6
(22) Date of filing: 18.03.1991
(51) Int. Cl.: C23C 24/10, C23C 26/02, B23H 5/00, B23K 35/32, F16C 33/14

(54) **METHOD FOR WORKING SURFACES ON METALS**
VERFAHREN ZUR OBERFLÄCHENBEHANDLUNG VON METALLEN
PROCEDE DE TRAITEMENT DE SURFACES METALLIQUES

(30) Priority: 19.03.1990 SE 9000966; 19.03.1990 SE 9000967; 19.03.1990 SE 9000968
(43) Date of publication of application: 11.05.1994
(73) Proprietor: DUROC AB, S-910 20 Hörnefors (SE)
(72) Inventor: OLOFSSON, Johan, Lennart, S-902 34 Umea (SE); ILAR, Per, Torbjörn, Edvin, S-951 35 Lulea (SE)
(74) Representative: Rottmann, Maximilian R.
(86) International application number: SE9100203
(87) International publication number: WO9114799

(56) References cited:
- EP-A- 0 190 378
- DE-A- 3 635 751
- DE-C- 3 433 698
- DE-C- 3 509 582
- DE-C- 3 715 327
- GB-A- 1 106 794
- GB-A- 2 052 566
- PATENT ABSTRACTS OF JAPAN, Vol. 12, No. 5, C467; & JP,A,62 161 966, publ. 1987- 07-17 (TOYOTA MOTOR CORP).
- VERKSTAEDERNA, Vol. 67, September 1971, En konferensrapport: "Modern teknik foer pressverktygstillverkning", page 475 - page 476, see especially page 476, column 2, line 15 - line 23, column 3, line 19 - line 21.
- Metals Handbook, 8th edition, Vol. 3, 1967/1972, Ed. by TAYLOR LYMAN et al., "Machining", Metals Park, Ohio 44073, page 227 - page 233, page 257, page 280 - page 281, see especially page 230, column 3, line 1 - line 4, from the bottom; page 257, contents, lines 1 and 3; page 280, column 1, line 1 - line 4.
- Metalworking Production, February 1979, Special Report, "Electrical machining - the choice is yours", page 60 - page 65, "ECM/EDM-the machines and applications surveyed", page 70 - page 78, see especially page 71, column 1, line 33 - line 38; page 78, column 1, line 5 - line 18; figures 1, 3 and 4.

## Description

The present invention relates to a method for machining or working surfaces on metals, namely for creating surfaces with self-lubricating properties on metals by providing a surface layer which is homogeneous with the base metal and of lubricating character, whereby said surface layer of the metal is melted with high energy, e.g. a laser.

It is already known to create surfaces with self-lubricating properties by immersing a sintered metal into a smelt of lead or tin. Thus, one obtains a matrix of the base metal on which the applied material, e.g. lead, has filled up the porosity provided between the grains. When loaded, the lead will be pressed out and form a lubricating layer between two surfaces which slide relative to each other. This technique is used commercially for e.g. various types of bearing seats.

It is also known to increase the wear resistance, in adhesive as well as abrasive wearing, of a metal surface by locally melting the metal surface with high energy and into the smelt add hard particles with good wear properties such as carbides, nitrides or borides. This technique is known from US-A-4 299 860 and is designated as laser impregnation, whereby a metal composite is created in the surface, consisting of substantially unchanged particles, e.g. titanium carbides, in a matrix of the remelted base metal.

It is also known to add to a smelt created e.g. by laser, various alloying materials, e.g. molybdenum, whereby a new alloy is created in the remelt area, so called recovery with laser.

From DE-C-34 33 698 it is further known a method for surface treatment which comprises melting a part of the substrate surface with a plasma-arc and simultaneously adding an additive powder to the molten portion to thereby alter the properties of the surface. The additive powders can be metals or metal mixtures, alloys, compounds like MoS₂ or carbides or ceramics like Al₂O₃. The additives can remain as particles uniformly dispersed in the remelt base metal and serve i.a. for improving the wear resistance and lubricating properties of the metal surfaces. The plasma-arc can be moved relative to the surface to obtain e.g. a string.

In DE-C-35 09 582 a method for treating the surface of metallic articles, like e.g. a railroad wheel, is defined, whereby the surface is molten by a laser beam and simultaneously an additive pulver is incorporated into the melt to thereby form a surface layer with properties different to the base material, e.g. to improve wear resistance by incorporating hard metal particles, like carbides, into the layer. In order to cover the whole surface with such a remelt layer the laser beam and the surface are laterally displaced with respect to each other. With this technique parallel strings which overlap each other are created.

The object of the present invention to provide a surface layer which is homogeneous with the base metal and having lubricating character, is arrived at by melting the surface layer of the metal while at the same time adding molybdenum or an alloy or mixture including molybdenum to the smelt, whereby a metal composite is obtained, consisting of substantially unchanged particles of the added molybdenum material in a matrix of the remelt base metal and carrying out surface impregnation by locating surface treating strings relative each other so that they extend partially integrated with each other, whereby a portion of 2-50%, preferably 20-40%, of the width of one of the surface treating strings is integrated with a portion of 2-50%, preferably 20-40%, of the width of the adjacent surface treating string, and whereby a certain portion of the width of one of the surface treating strings is integrated with as big or substantially as big a portion of the width of the adjacent surface treating string.

Thus, with the present invention there is obtained a surface layer of self-lubricating character and homogeneously connected with the base material without the risk for splintering thereof or loosening in another way. The base material gets, in other words, a surface layer with a prolonged self lubricating character between e.g. sliding metal surfaces which can be subjected to high loads without loosening of the surface layer.

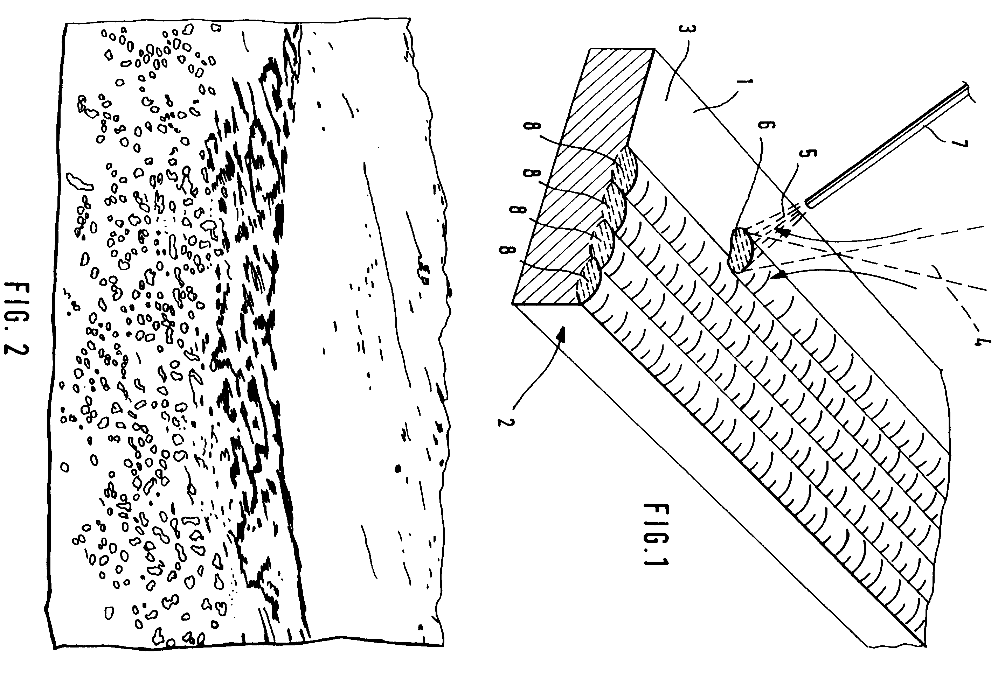

The invention will be further described below with reference to the accompanying drawings in which
fig. 1 is a perspective view of a metal object, the surface of which has been treated according to the invention;
fig. 2 is a metallographic picture of an etched metal object which has been surface impregnated;
fig. 3 is a section through a surface impregnated surface;
fig. 4 is a section through a surface impregnated surface after levelling thereof;
fig. 5 is an example of two surface impregnated machine components, teeth;
fig. 6 is a perspective View of a metal object with an annular surface impregnating string;
fig. 7 is a perspective view of the metal object of fig. 6 during a wire sparking moment;
fig. 8 is a perspective view of a die provided by wire sparking of the metal object of fig. 6;
fig. 9 is a perspective view of a stamp simultaneously obtained by wire sparking of the metal object of fig. 6;
fig. 10 is a section through the upper part of the die and the lower part of the stamp of figs. 8 and 9;
fig. 11 is a section through a die which has been surface impregnated along bottom and end edges;
fig. 12 is a section through the die of fig. 11;
fig. 13 is a section through a die according to figs. 11 and 12 during a die sparking operation;
fig. 14 is a section through surface impregnated and die spark treated portions of a die according to figs. 10 and 11;

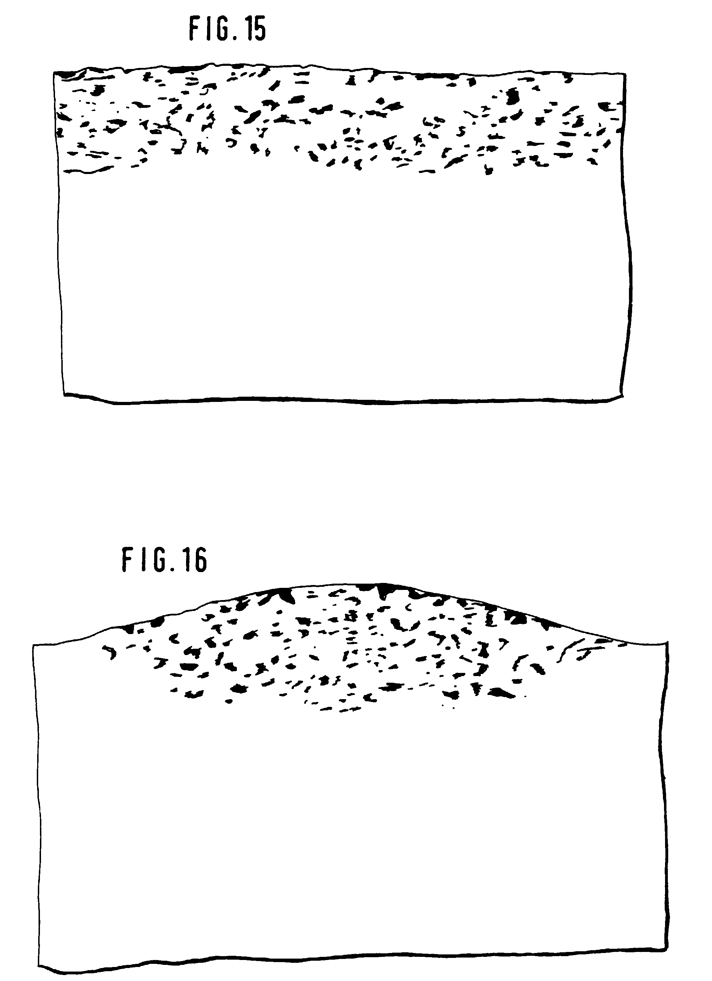

fig. 15 is a metallographic picture of an etched metal object which has been surface impregnated;
fig. 16 is also a metallographic picture of an etched metal object having been surface impregnated; and
fig. 17 is a section through the smelt in a treated surface.

In order to create or provide surfaces with self-lubricating properties on metal surfaces 1 on objects 2 of metal or another suitable material, the metal surfaces 1 are impregnated by melting the surface layers 3 thereof with high energy, e.g. laser beams 4, while simultaneously adding a metal, metal alloy or metal mixture 5 to the smelt 6, whereby a metal composite is formed after setting, consisting of a matrix of the remelt surface layer 3 and substantially unchanged grains/particles of the added material. The metal, metal alloy or metal mixture can be added to the smelt 6 from a reservoir (not shown) through a nozzle 7.

Fig. 2 shows, with a metallographic picture, a cross section through a metal object (SS 2258) which has been surface treated in accordance with the abovementioned method, wherein pulverous molybdenum has been added to the smelt through a nozzle. From the picture it is apparent that the molybdenum particles have penetrated into the smelt, whereby a metal composite has been created consisting of substantially unchanged molybdenum particles in a matrix of the remelt base metal. The hardness of the molybdenum particles amounts to about HV 400 and for the remelt base metal to about HV 600.

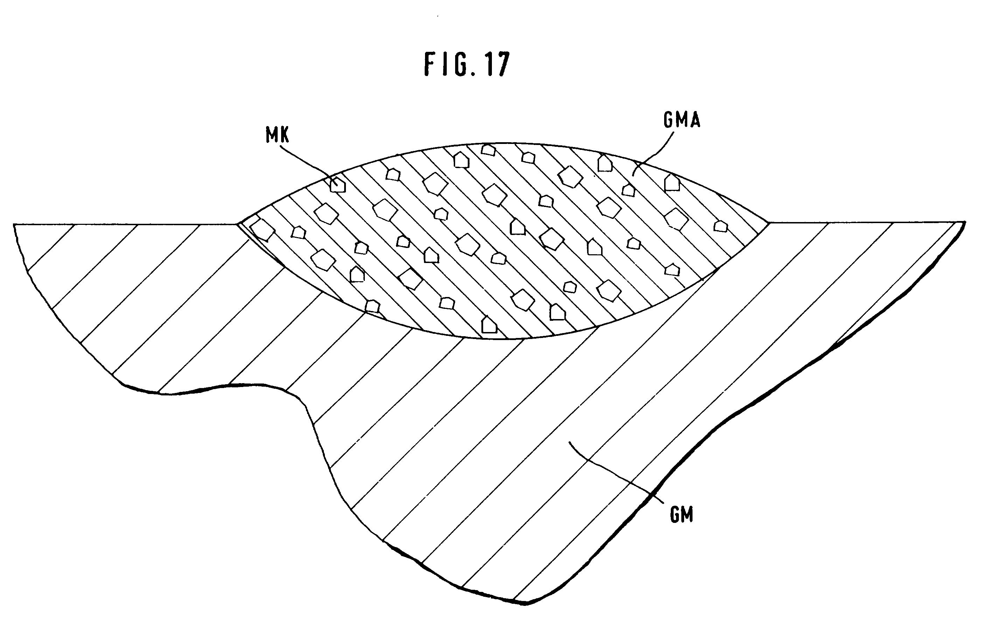

As is apparent in more detail from fig. 17, the metal comprises, after working or machining, an unchanged base metal GM and a remelt base metal GMO with unchanged molybdenum grains MK.

The added material is molybdenum and eventually lead and eventually tin and eventually indium or combinations of these substances. An example of the latter is molybdenum disulfide or addition of molybdenum to a smelt including sulphur or addition of molybdenum and sulphur to a smelt for forming molybdenum disulfide therein.

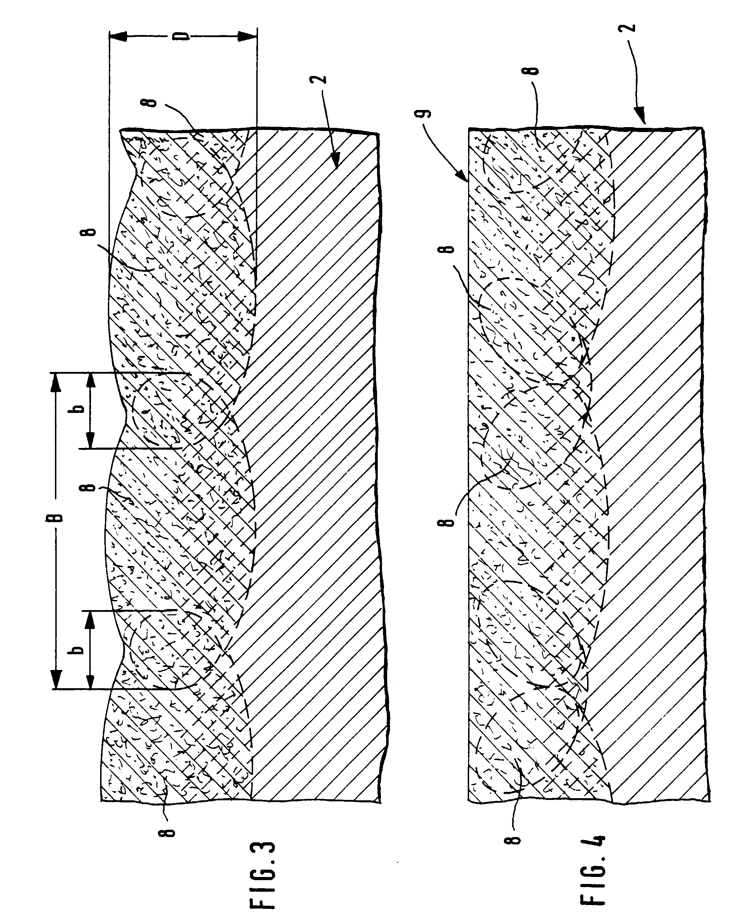

The surface impregnation may be carried out partially on predetermined portions of the object 2 and surface treating strings 8 are formed by displacing the object 2 and laser beams 4 relative to each other. The surface treating strings 8 are preferably located so in relation to each other that a portion b of 2-50%, preferably 20-40% of the width B of one of the surface treating strings 8 is integrated with a portion b of 2-50%, preferably 20-40% of the width B of the other surface treating string 8 (see fig. 3). This arrangement ensures homogeneous properties of the treated metal surfaces 1 and gives an increased working allowance.

The surface treating strings 8 are further located relative to each other such that they permit subsequent treatment, e.g. grinding or sparking, without exposure of completely or partially untreated material between specific surface treating strings 8.

In order to further improve the wear resistance of the metal surface 1, a metal, metal mixture or metal alloy 5 as above and a wear resistent particle such as carbides or ceramics may be added to the smelt 6 at the same time. In this way, a metal composite is obtained, consisting of "soft particles" of lubricating character and "hard particles" with high wear resistance in a matrix of the remelt base metal.

Furthermore, the surface treating strings 8 are preferably imparted a largest depth of penetration D in the metal surface of 0,1-5 mm.

When required, the surface impregnated metal surfaces are levelled (see fig. 4) and impregnated surfaces 9 with low friction and improved wear resistance are obtained.

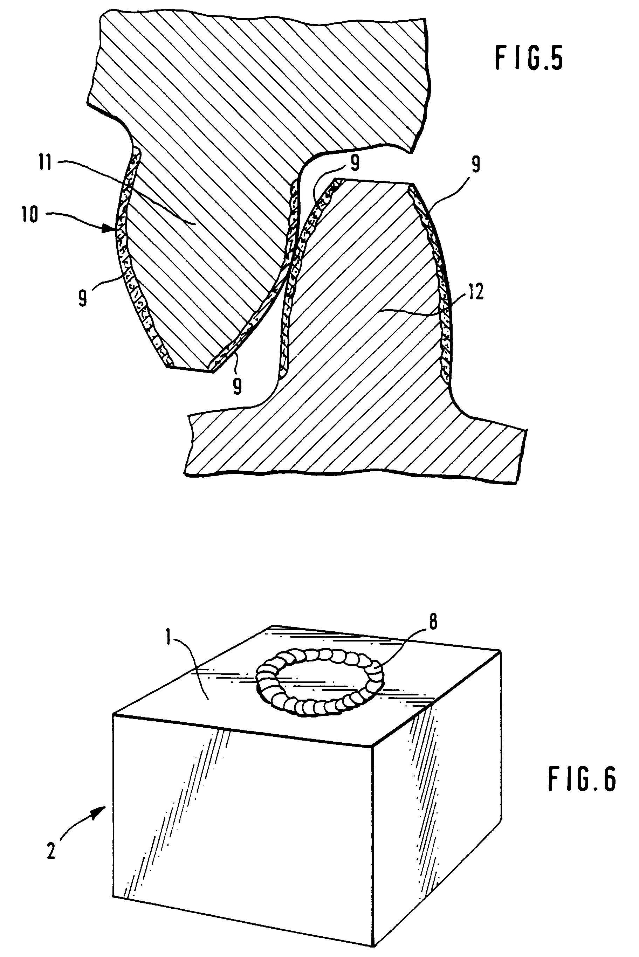

The surface treating strings 8 are preferably disposed locally on such surfaces on objects, e.g. pressing tools, tools, teeth, which are particularly exposed to wearing, while other surfaces of the object preferably are kept free from surface treating strings 8. An example of where surface treating strings 8 preferably can be located for friction reducing purpose is shown in fig. 5, where surface treating strings 8 have been provided on curved surfaces 10 and teeth 11, 12.

For obtaining wear surfaces of desired dimensions and/or smoothness, the surface impregnated metal surfaces 1 may be spark machined. In certain cases it might be suitable to wire spark machine the metal surfaces, while it in other cases it is suitable to die spark machine said metal surfaces 1.

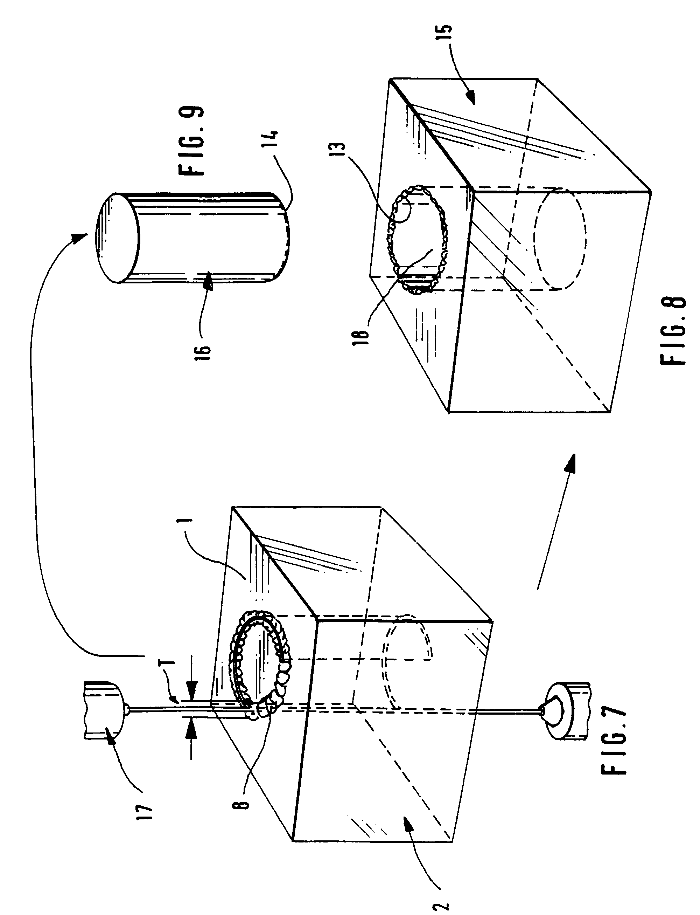

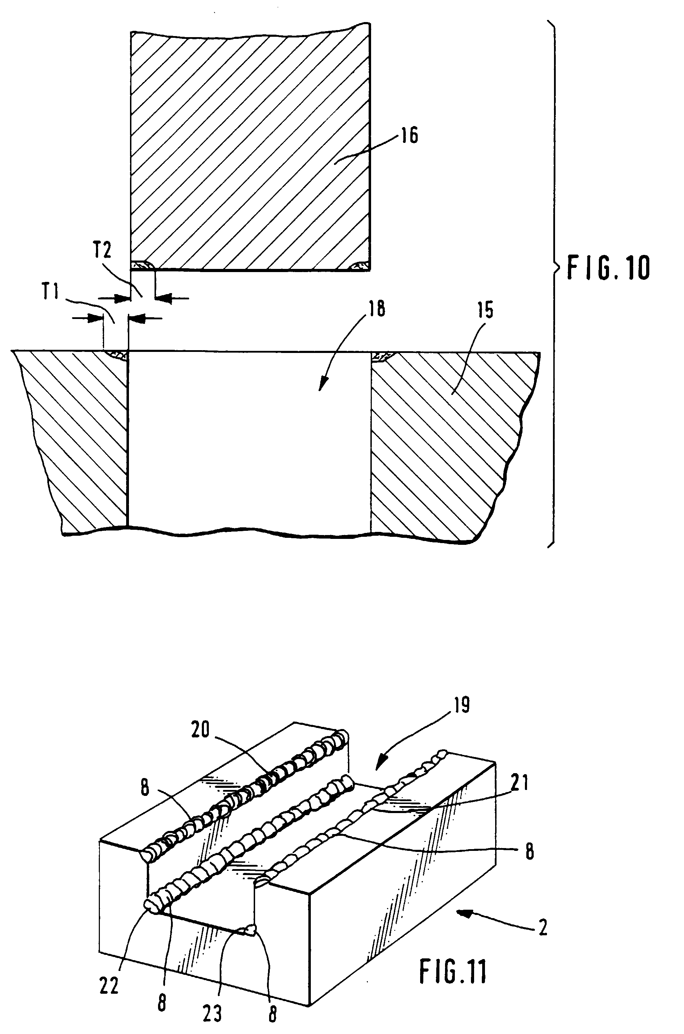

An example of wire spark machining of surface impregnated metal surfaces is shown in figs. 7-10. In these figures, there is shown an object 2, which on one metal surface has been impregnated locally along a contour line corresponding to an (e.g. circular) end edge 13 and/or 14 of a die 15 and/or a stamp 16 (and/or a punch), whereafter the die 15 and/or stamp 16 (and/or punch) are formed by wire spark machining along said contour line by means of a wire sparking aggregate 17. Surface impregnation of the metal surface 1 may in this case occur by providing along said contour line a surface impregnating string 8 of sufficient width T for a portion T1 of said width T to form a wear surface on the die 15 while the remaining portion T2 forms a wear surface on the end surface of the stamp 16 (or punch), whereby a hole 18 in the die 15 for the stamp 16 (or punch) and the stamp 16 (or punch) are obtained in the same moment by wire spark machining along said (here circular or annular) contour line.

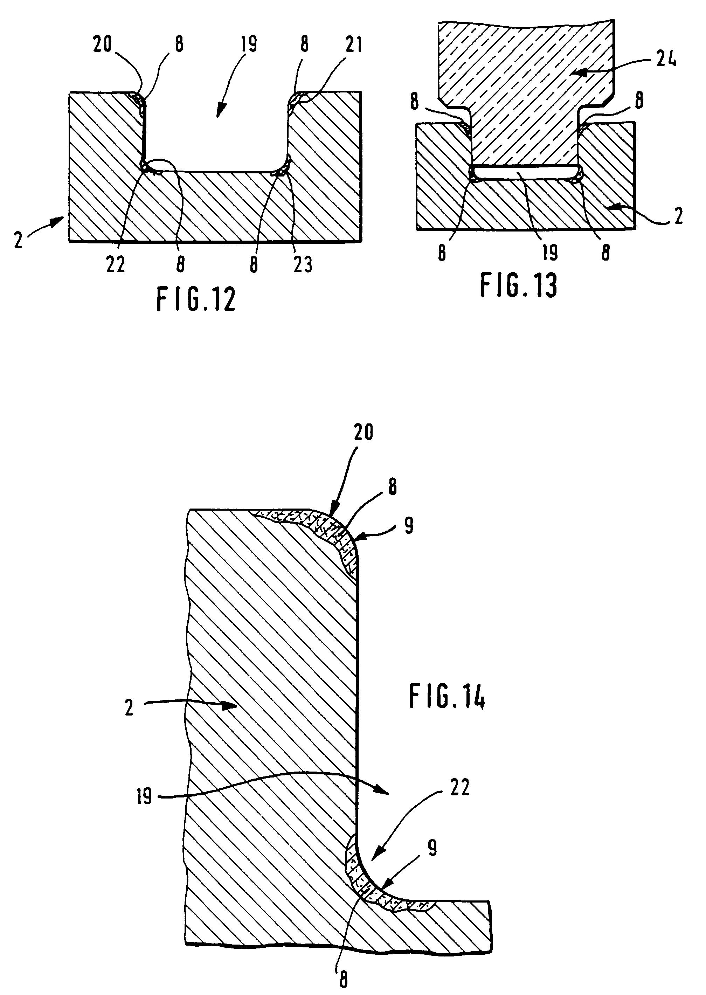

In figs. 11-14 there is shown an example of die spark machining of impregnated metal surfaces. In these figures there is shown as an example an object 2 in the shape of a schematically illustrated tool die with a countersink 19, the end edges 20, 21 and bottom edges 22, 23 of which are impregnated locally by being provided with surface treating strings 8, whereafter the surface impregnated edges are die spark machined to final dimensions. This can be done by means of a die sparking electrode 24 (see fig. 13) which is formed after the final shape and/or surface (see fig. 14) of the countersink 19 after the die spark machining.

The method according to the invention is not limited to what is defined above, but may vary within the scope of the following claims. As an alternative it can be mentioned that the melting of the surface layer may be carried out by means of other high energy than laser beams.

## Claims

1. Method for machining or working surfaces on metals, namely for creating surfaces with self-lubricating properties on metals (1) by providing a surface layer (B) which is homogeneous with the base metal and of lubricating character, whereby said surface layer of the metal is melted with high energy, e.g. a laser (4), **characterized by** melting the surface layer (3) of the metal while at the same time adding molybdenum or an alloy or mixture (5) including molybdenum to the smelt (6), whereby a metal composite is obtained, consisting of substantially unchanged particles of the added molybdenum material in a matrix of the remelt base metal and carrying out surface impregnation by locating surface treating strings (8) relative each other so that they extend partially integrated with each other, whereby a portion (b) of 2-50%, preferably 20-40%, of the width (B) of one of the surface treating strings (8) is integrated with a portion (b) of 2-50%, preferably 20-40%, of the width (B) of the adjacent surface treating string (8), and whereby a certain portion (b) of the width (B) of one of the surface treating strings (8) is integrated with as big or substantially as big a portion (b) of the width (B) of the adjacent surface treating string (8).

2. Method according to claim 1, **characterized by** adding to the smelt (6) an alloy or mixture including molybdenum as well as tin and/or lead and/or indium or combinations of these substances.

3. Method according to claim 1, **characterized by** adding molybdenum disulfide to the smelt (6).

4. Method according to claim 1, **characterized by** melting molybdenum into a smelt (6) containing a metal and sulphur for forming molybdenum disulfide therein.

5. Method according to claim 1, **characterized by** impregnating the smelt (6) with molybdenum and sulphur for forming molybdenum disulfide therein.

6. Method according to any preceding claim, **characterized by** further adding to the smelt (6) wear resistant particles such as carbides and/or ceramics.

7. Method according to any preceding claim, **characterized by** imparting a largest depth of penetration (D) of 0,1 - 5 mm of the surface treating strings (8) into said material.

8. Method according to any preceding claim, **characterized by** disposing the surface treating strings (8) substantially locally on such surfaces on objects (2), e.g. on pressing tools, tools or teeth, which are especially subjected to wear, while the remaining surfaces on said objects are kept free from surface treating strings (8).

9. Method according to any preceding claim, **characterized by** providing curved surfaces on the objects (2) with surface treating strings.

10. Method according to any preceding claim, **characterized by** spark machining the surface impregnated metal surfaces (1) in order to produce wear surfaces of desired dimension and/or suitable smoothness.

11. Method according to claim 10, **characterized by** wire spark machining the surface impregnated metal surfaces (1).

12. Method according to claim 11, **characterized by** surface impregnating the metal surfaces (1) locally along a contour line corresponding to an end edge (13 and/or 14) on a die (15) and/or a stamp (16) and/or a punch, whereafter the die and/or stamp and/or punch are formed by wire spark machining along said contour line.

13. Method according to claim 10, **characterized by** die spark machining the surface impregnated metal surfaces (1).

14. Method according to claim 13, **characterized by** locally surface impregnating at least an end edge (20 and/or 21) and/or a bottom edge (22 and/or 23) of a countersink (19) in a tool die provided in said surface, whereafter the surface impregnated end edge and/ /or bottom edge are die spark machined to final size.

15. Method according to claim 14, **characterized by** die spark machining the end edge (20 and/or 21) and/or bottom edge (22 and/or 23) of the countersink (19) by means of a die sparking electrode (24) which is formed after the final shape of the countersink after the die spark machining.

## Patentansprüche

1. Verfahren zur Bearbeitung oder Behandlung von Metalloberflächen, namentlich zum Erzeugen von Oberflächen auf Metallen (1), die selbstschmierende Eigenschaften besitzen, indem eine Oberflächenschicht (B) vorgesehen wird, die mit dem Grundmetall homogen ist und schmierenden Charakter besitzt, wobei die genannte Oberflächenschicht des Metalls mit hoher Energie, z.B. mittels eines Lasers (4), geschmolzen wird, **dadurch gekennzeichnet, dass** die Oberflächenschicht (3) des Metalls geschmolzen wird, unter gleichzeitiger Zugabe von Molybdän oder einer Molybdän-Legierung oder - Mischung (5) zur Schmelze (6), wobei ein Metallverbund erhalten wird, der aus im wesentlichen unveränderten Partikeln des zugegebenen Molybdänmaterials in einer Matrix des umgeschmolzenen Basismetalls besteht, und dass eine Oberflächenmodifikation durchgeführt wird, indem Oberflächenbehandlungsstreifen (8) im Verhältnis zueinander so angeordnet werden, dass sie sich teilweise ineinander übergehend erstrecken, wobei ein Anteil (b) von 2-50%, vorzugsweise 20-40%, der Breite (B) eines der Oberflächenbehandlungsstreifen (8) in einen Anteil (b) von 2-50%, vorzugsweise 20-40%, eines benachbarten Oberflächenbehandlungsstreifens (8) übergeht, und wobei ein bestimmter Anteil (b) der Breite (B) eines der Oberflächenbehandlungsstreifen (8) in einen gleich grossen oder im wesentlichen gleich grossen Anteil (b) der Breite (B) des benachbarten Oberflächenbehandlungsstreifens (8) übergeht.

2. Verfahren nach Anspruch 1, dadurch gekennzeichnet, dass der Schmelze (6) eine Legierung oder Mischung zugegeben wird, die Molybdän sowie Zinn und/oder Blei und/oder Indium oder eine Kombination dieser Substanzen umfasst.

3. Verfahren nach Anspruch 1, dadurch gekennzeichnet, dass der Schmelze (6) Molybdändisulfid zugegeben wird.

4. Verfahren nach Anspruch 1, dadurch gekennzeichnet, dass Molybdän in eine Schmelze (6) aufgeschmolzen wird, die ein Metall und Schwefel enthält, um darin Molybdändisulfid zu bilden.

5. Verfahren nach Anspruch 1, dadurch gekennzeichnet, dass die Schmelze (6) mit Molybdän und Schwefel getränkt wird, um darin Molybdändisulfid zu bilden.

6. Verfahren nach einem der vorhergehenden Ansprüche, dadurch gekennzeichnet, dass der Schmelze (6) des weiteren abriebfeste Partikel wie Karbide und/oder Keramik zugegeben wird.

7. Verfahren nach einem der vorhergehenden Ansprüche, dadurch gekennzeichnet, dass den Oberflächenbehandlungsstreifen (8) eine maximale Eindringtiefe (D) von 0.1 - 5 mm in das genannte Material verliehen wird.

8. Verfahren nach einem der vorhergehenden Ansprüche, dadurch gekennzeichnet, dass die Oberflächenbehandlungsstreifen (8) im wesentlichen lokal an solchen Oberflächen von Objekten (2) angeordnet werden, z.B. bei Presswerkzeugen, Werkzeugen oder Zähnen, die speziell einer Abnützung unterworfen sind, währenddem die verbleibenden Oberflächen der genannten Objekte von Oberflächenbehandlungsstreifen (8) frei gehalten werden.

9. Verfahren nach einem der vorhergehenden Ansprüche, dadurch gekennzeichnet, dass gekrümmte Oberflächen der Objekte (2) mit Oberflächenbehandlungsstreifen (8) versehen werden.

10. Verfahren nach einem der vorhergehenden Ansprüche, dadurch gekennzeichnet, dass die oberflächenmodifizierten Metalloberflächen (1) elektroerosiv bearbeitet werden, um Verschleissflächen in gewünschten Dimensionen und/oder geeigneter Glätte zu erzeugen.

11. Verfahren nach Anspruch 10, dadurch gekennzeichnet, dass die oberflächenmodifizierten Metalloberflächen (1) durch Drahterodieren bearbeitet werden.

12. Verfahren nach Anspruch 11, dadurch gekennzeichnet, dass die Metalloberflächen (1) lokal oberflächenmodifiziert werden, und zwar entlang einer Umrisslinie, die einer Endkante (13 und/oder 14) auf einer Matrize (15) und/oder einem Stempels (16) und/oder einer Stanze entspricht, wonach die Matrize (15) und/oder der Stempel (16) und/oder die Stanze durch Drahterosion entlang dieser Umrisslinie ausgebildet werden.

13. Verfahren nach Anspruch 10, dadurch gekennzeichnet, dass die oberflächenmodifizierten Metalloberflächen (1) durch Senkerodieren bearbeitet werden.

14. Verfahren nach Anspruch 13, dadurch gekennzeichnet, dass mindestens eine Endkante (20 und/oder 21) und/oder eine Unterkante (22 und/oder 23) einer Vertiefung (19) einer in dieser Oberfläche vorgesehenen Werkzeugmatrize lokal oberflächenmodifiziert werden, wonach die oberflächenmodifizierte Endkante und/oder Unterkante durch Senkerosion auf ihr Endmass bearbeitet werden.

15. Verfahren nach Anspruch 14, dadurch gekennzeichnet, dass die Endkante (20 und/oder 21) und/oder die Unterkante (22 und/oder 23) der Vertiefung (19) durch Senkerosion bearbeitet werden, und zwar mittels einer Senkerosionselektrode (24), die gemäss der endgültigen Gestalt der fertig senkerodierten Vertiefung geformt ist.

## Revendications

1. Procédé pour usiner ou travailler des surfaces sur des métaux, plus précisément pour créer des surfaces présentant des propriétés auto-lubrifiantes sur des métaux (1), qui consiste à réaliser une couche de surface (B), qui est homogène avec le métal de base et présente un caractère lubrifiant, où la couche de surface du métal est fondue moyennant une haute énergie, par exemple un laser (4), caractérisé en ce qu'il consiste à faire fondre la couche de surface (3) du métal tout en ajoutant simultanément du molybdène ou un alliage ou un mélange (5) comprenant du molybdène à la masse fondue (6), de façon à obtenir un composite métallique, constitué de particules essentiellement non modifiées du matériau de molybdène ajouté, dans une matrice du métal de base refondu, et à mettre en oeuvre une imprégnation en surface en disposant des cordons (8) de traitement de surface les uns par rapport aux autres de façon qu'ils s'étendent en étant partiellement intégrés les uns aux autres, où une portion (b) de 2 à 50 % et de préférence de 20 à 40 % de la largeur (B) de l'un des cordons de traitement de surface (8) est intégré à une portion (b) de 2 à 50 % et de préférence de 20 à 40 % de la largeur (B) du cordon de traitement de surface adjacent (8), et où une certaine portion (b) de la largeur (B) de l'un des cordons de traitement de surface (8) est intégré à une portion (b), aussi grande ou essentiellement aussi grande, de la largeur (B) du cordon de traitement de surface adjacent (8).

2. Procédé selon la revendication 1, caractérisé en ce qu'il consiste à ajouter à la masse fondue (6) un alliage ou un mélange comprenant du molybdène ainsi que de l'étain et/ou du plomb et/ou de l'indium ou des combinaisons de ces substances.

3. Procédé selon la revendication 1, caractérisé en ce qu'il consiste à ajouter du disulfure de molybdène à la masse fondue (6).

4. Procédé selon la revendication 1, caractérisé en ce qu'il consiste à faire fondre du molybdène pour donner une masse fondue (6) contenant un métal et du soufre, pour y former du disulfure de molybdène.

5. Procédé selon la revendication 1, caractérisé en ce qu'il consiste à imprégner la masse fondue (6) de molybdène et de soufre pour y former du disulfure de molybdène.

6. Procédé selon l'une quelconque des revendications précédentes, caractérisé en ce qu'il consiste à ajouter en outre à la masse fondue (6) des particules résistant à l'usure telles que des carbures et des céramiques.

7. Procédé selon l'une quelconque des revendications précédentes, caractérisé en ce qu'il consiste à assurer une profondeur maximale de pénétration (D) de 0,1 à 5 mm des cordons de traitement de surface (8) dans ledit matériau.

8. Procédé selon l'une quelconque des revendications précédentes, caractérisé en ce qu'il consiste à disposer les cordons de traitement de surface (8) en une position essentiellement locale sur les surfaces d'objets (2), par exemple d'outils de pressage, d'outils ou de dents, qui sont spécialement soumis à usure, les surfaces restantes desdits objets étant maintenues exemptes de cordons de traitement de surface (8).

9. Procédé selon l'une quelconque des revendications précédentes, caractérisé en ce qu'il consiste à réaliser des surfaces courbes sur les objets (2) comportant des cordons de traitement de surface.

10. Procédé selon l'une quelconque des revendications précédentes, caractérisé en ce qu'il consiste à usiner par étincelage les surfaces métalliques (1) imprégnées en surface, pour produire des surfaces d'usure ayant les dimensions souhaitées et/ou le lissé approprié.

11. Procédé selon la revendication 10, caractérisé en ce qu'il consiste à usiner par étincelage au fil les surfaces métalliques (1) imprégnées en surface.

12. Procédé selon la revendication 1, caractérisé en ce qu'il consiste à imprégner en surface les surfaces métalliques (1), localement autour d'un contour correspondant à un bord terminal (13 et/ou 14) sur une matrice (15) et/ou une empreinte (16) et/ou un poinçon, ce après quoi la matrice et/ou l'empreinte et/ou le poinçon sont formés par usinage par étincelage au fil le long dudit contour.

13. Procédé selon la revendication 10, caractérisé en ce qu'il consiste à usiner par étincelage à la matrice les surfaces métalliques (1) imprégnées en surface.

14. Procédé selon la revendication 13, caractérisé en ce qu'il consiste à imprégner localement en surface au moins un bord terminal (20 et/ou 21) et/ou un bord inférieur (22 et/ou 23) d'un outil à chanfreiner (19) dans une matrice disposée dans ladite surface, ce après quoi le bord terminal imprégné en surface et/ou le bord inférieur sont soumis à un usinage par étincelage à la matrice, jusqu'à la taille finale.

15. Procédé selon la revendication 14, caractérisé en ce qu'il consiste à usiner par étincelage à la matrice le bord terminal (20 et/ou 21) et/ou le bord inférieur (22 et/ou 23) de l'outil à chanfreiner (19) au moyen d'une électrode d'étincelage à matrice (24), qui est formée après la forme finale de l'outil à chanfreiner, après l'usinage par étincelage à la matrice.
